# EUROPÄISCHE PATENTSCHRIFT

(11) **EP 1 447 247 B1**
(45) Veröffentlichungstag und Bekanntmachung des Hinweises auf die Patenterteilung: **13.04.2011**
(21) Anmeldenummer: 04002500.9
(22) Anmeldetag: 05.02.2004
(51) Int. Cl.: B60G 11/27, B60G 9/00

(54) **Aufhängung einer Starrachse in einem Fahrzeug**
Rigid axle suspension for a vehicle
Suspension à essieu rigide pour un véhicule

(30) Priorität: 17.02.2003 AT 2332003
(43) Veröffentlichungstag der Anmeldung: 18.08.2004
(73) Patentinhaber: MAN Nutzfahrzeuge Österreich AG, 4400 Steyr (AT)
(72) Erfinder: Keppel, Manfred, 7540 Urbersdorf (AT); Mekina, Markus, 4400 Steyr (AT)

(56) Entgegenhaltungen:
- EP-A- 0 940 325
- WO-A-03/011620

## Beschreibung

Die Erfindung betrifft ein Fahrgestell eines Nutzfahrzeugs, insbesondere Lastkraftwagen, mit Merkmalen der im Oberbegriff des Anspruchs 1 angegebenen Art.

Die Erfindung geht aus von der DE 196 24 242 A1, welche die gattungsgemäßen Merkmale offenbart. Bei dieser bekannten Achskonstruktion sind zu ihrer Längsführung und Stabilisierung zwei obere Längslenker und darunter ein spezieller Drehstabilisator mit Längslenkern vorgesehen. Diese bekannte Achsanlenkung ist in ihrer Gesamtheit vergleichsweise aufwendig und teuer und benötigt im Nutzfahrzeug auch sehr viel Platz.

Des weiteren sei auf ein aus der EP 0940325 B1 bekanntes Fahrgestell eines Nutzfahrzeugs hingewiesen, das eine nach Art einer selbststabilisierenden Verbundlenkerachse ausgebildete Starrachse offenbart, bei der die Funktion eines das Wanken des Nutzfahrzeugs begrenzenden Stabilisators einem Bauteilverbund aufgeprägt ist, der aus dem Starrachskörper und zwei fest an diesem angeschlossenen Längslenkern besteht. Aufgrund der Stabilisatorfunktion ist der Starrachskörper zwischen den angeschlossenen Längslenkern definiert torsionsfähig ausgebildet und die Längslenker sind in Vertikalrichtung vergleichsweise biegesteif, aber um ihre Längsachse begrenzt tordierbar ausgebildet. Diese Verbundlenkerachse ist über je Achsseite ein aus einer Luftfeder und einem hierzu koaxialen Stoßdämpfer bestehendes Federbein gegenüber dem Nutzfahrzeug-Rahmen abgestützt, für die Querlenkung sorgt ein speziell angeschlossener Panhardstab. Diese bekannte, technisch äußerst hochstehende Achskonstruktion ist für schwere Nutzfahrzeuge, insbesondere Lastkraftwagen, konzipiert, bei denen aufgrund ihres überwiegenden Einsatzfeldes im Fernverkehr höchster Fahrkomfort eine elementare Bedingung ist. Für Nutzfahrzeuge jedoch, die in der Regel nicht im Fernverkehr, sondern eher im Verteiler- und Zubringerverkehr oder für geringere Lasten vorgesehen sind, wäre eine solch hochkomfortable Achskonstruktion zu aufwendig und zu teuer.

Es ist daher Aufgabe der Erfindung, für ein Fahrgestell der gattungsgemäßen Art eine luftgefederte Vorderachse zu schaffen, die einschließlich ihrer Federungs-, Dämpfer-, Längs- und Querführungs- sowie Stabilisierungselemente leichtgewichtig und platzsparend sowie kostengünstig herstellbar und im Fahrgestell im Bereich unterhalb eines Antriebsaggregates gut unterbringbar ist.

Diese Aufgabe ist bei einem Fahrgestell der gattungsgemäßen Art erfindungsgemäß durch eine Vorderachskonstruktion mit den im Anspruch 1 angegebenen Merkmalen gelöst.

Vorteilhafte Ausgestaltungen und Details der erfindungsgemäßen Vorderachskonstruktion sind in den Unteransprüchen gekennzeichnet.

Die erfindungsgemäße Vorderachskonstruktion zeichnet sich durch die Kombination einfach und kostengünstig herstellbarer Bauteile aus. Die beiden Längslenker sind als Multifunktionsorgane konzipiert, denn es ist ihnen außer ihrer Längsführungsfunktion auch die Funktion als Abstützorgan für die Luftfeder und den Stoßdämpfer sowie als Anschlussorgan für einen Stabilisator aufgeprägt, bei einem der Längslenker zusätzlich auch noch die Funktion als Anschlussorgan für den Panhardstab. Dadurch, dass der U-förmige Querträger rahmenseitig sowohl das Anschlussorgan für den Panhardstab als auch für die beiden Stoßdämpfer bildet, sind eigenständige Anschlussböcke für letztere - wie ansonsten üblich - nicht nötig. Die Befestigung und Abstützung der Luftfedern auf den Multifunktions-Längslenkern vermeidet ebenfalls ansonsten notwendige achsseitige Anschlussböcke und stellt eine extrem platzsparende Lösung dar. Außerdem ermöglicht es die erfindungsgemäße Lösung, dass ein herkömmlicher Starrachskörper verwendbar ist, der unverändert auch bei anderen Fahrzeugen mit anderen Achskonstruktionen und Aufhängungen zur Anwendung kommt.

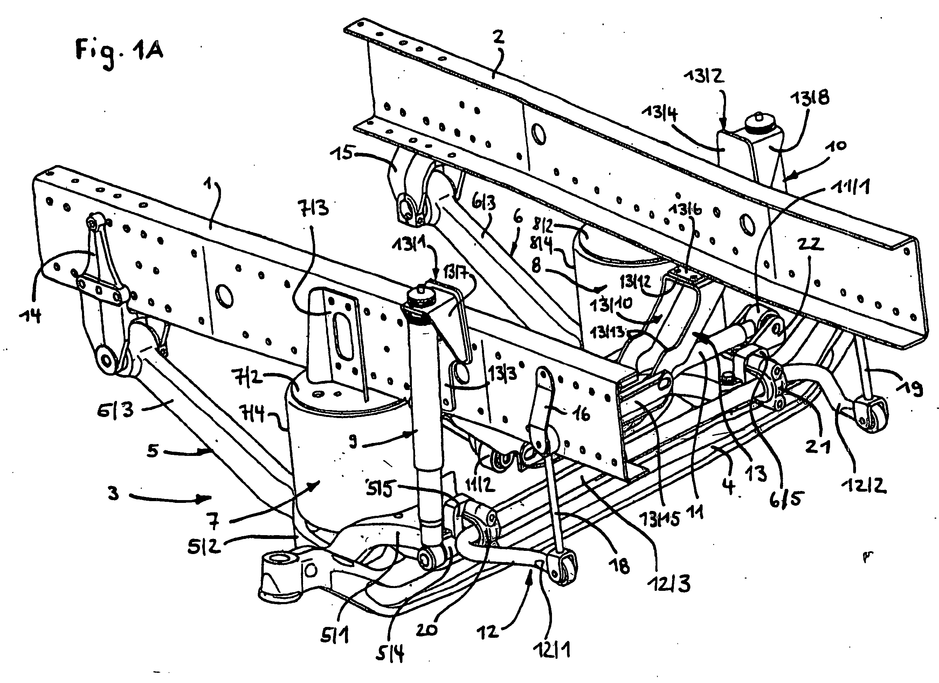

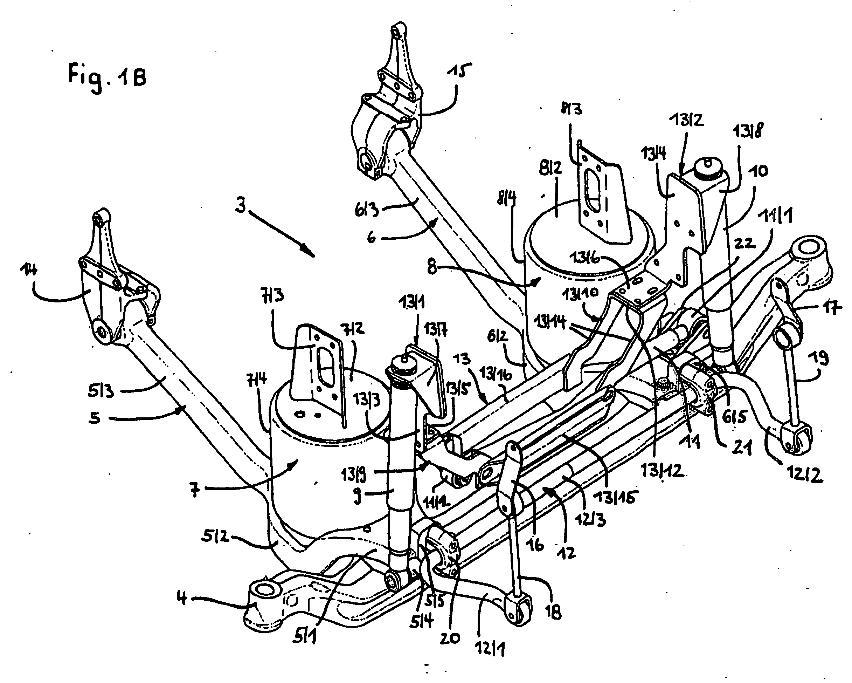

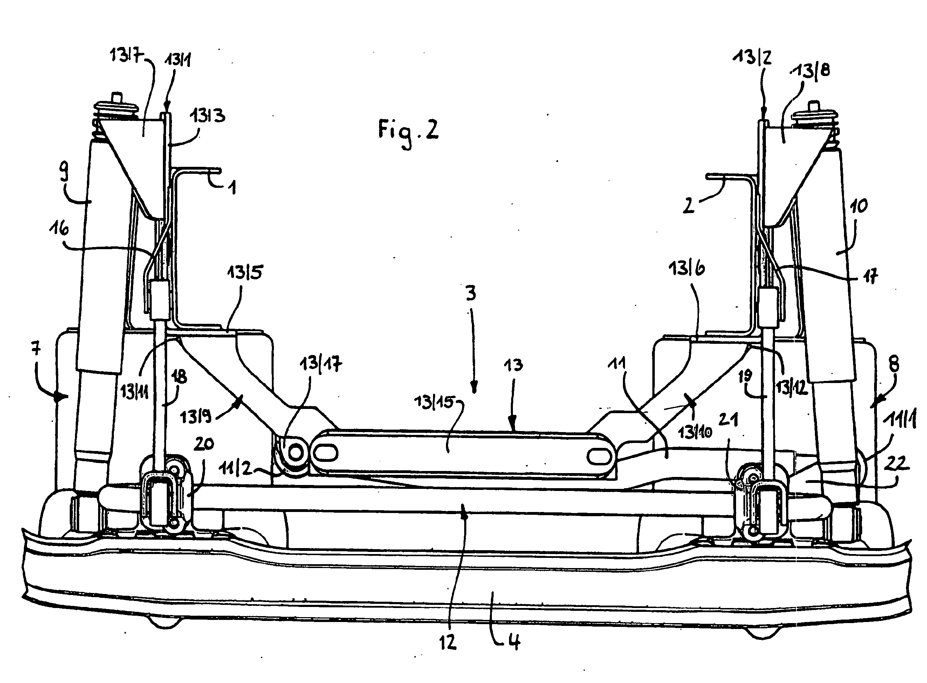

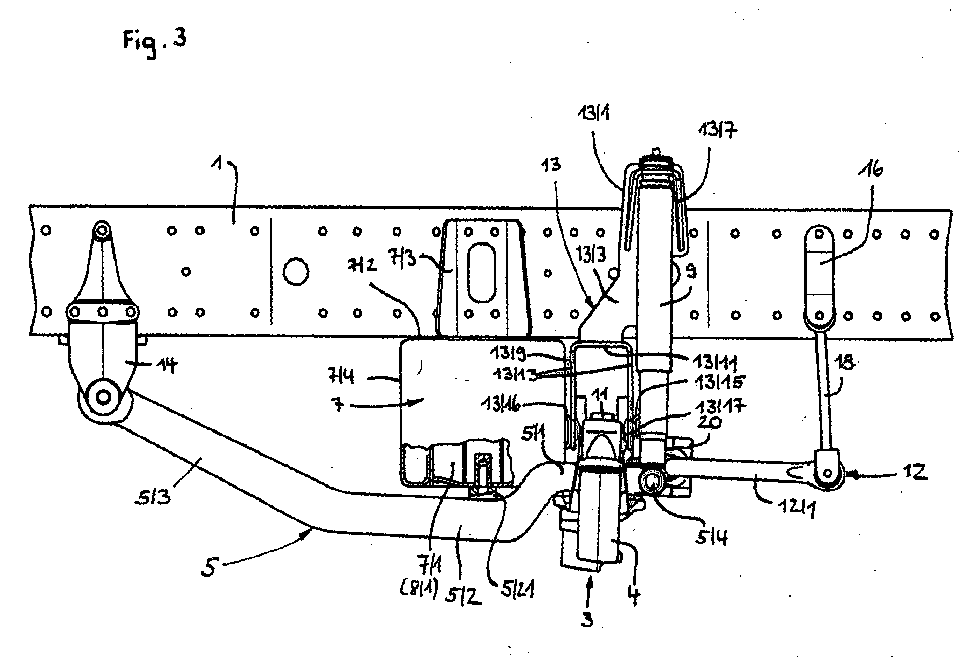

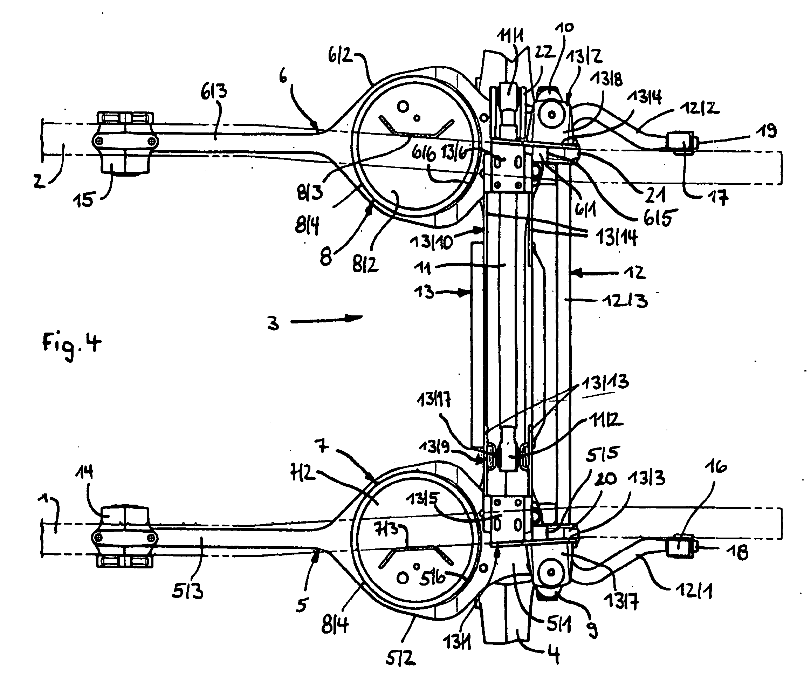

Nachstehend ist die erfindungsgemäße Lösung anhand eines in der Zeichnung dargestellten Ausführungsbeispiels näher erläutert. In der Zeichnung ist dieses Ausführungsbeispiel der erfindungsgemäßen Vorderachse in Fig. 1 A und 1 B in Perspektivansicht von schräg oben mit und ohne Rahmen-Längsträger, in Fig. 2 in Vorderansicht, in Fig. 3 in Seitenansicht und in Fig. 4 in Draufsicht gezeigt, wobei dort die Rahmen-Längsträger nur schwach-liniert angedeutet sind.

Die Erfindung bezieht sich auf das Fahrgestell eines Nutzfahrzeugs, insbesondere Lastkraftwagen oder eines solchen Fahrzeugs, das auf einem Lastkraftwagen-Fahrgestell basierend für spezielle Anwendungszwecke entsprechend aufgebaut wird. In der Zeichnung sind als Teile des Fahrgestells die beiden Längsträger des Rahmens mit 1 und 2 und die erfindungsgemäße Vorderachse mit 3 bezeichnet. Diese Vorderachse 3 besteht aus einem Starrachskörper 4 und zwei Multifunktions-Längslenkern 5, 6 und ist über zwei je Achsseite eine Luftfeder 7, 8 und einen hierzu benachbarten Stoßdämpfer 9, 10 gegenüber den Rahmen abgestützt. Zur Querführung der Vorderachse 3 ist ein Panhardstab 11 und zur Wankstabilisierung des rahmenfesten Aufbaus gegenüber der Vorderachse 3 ist ein Stabilisator 12 vorgesehen. Oberhalb des Starrachskörpers 4 ist außerdem ein spezieller, von vorne gesehen etwa U-förmiger Querträger 13 vorgesehen, der mit den beiden Längsträgern 1, 2 des Rahmens fest verbunden ist. Erfindungsgemäß kennzeichnet sich diese Vorderachse 3 des weiteren durch folgende Merkmale:
a) die Vorderachse 3 ist nach Art einer Verbundlenkerachse ausgebildet, bei der zwei Multifunktions-Längslenker 5, 6 weit voneinander beabstandet jeweils oben am Starrachskörper 4 aufgesetzt und fest mit diesem verbunden sind,
b) der Querträger 13 bildet das rahmenseitige Anlenkorgan für den Panhardstab 11 und außerdem mit seinen beiden entsprechend ausgebildeten oberen Schenkelenden das rahmenseitige Anschlussorgan für die beiden Stoßdämpfer 9, 10,
c) die an ihren freien Enden in fest an den Längsträgern 1, 2 befestigten Lagerböcken 14, 15 gelagerten Multifunktions-Längslenker 5, 6 bilden jeweils das achsseitige Abstütz- und Anschlussorgan für die Luftfeder 7, 8, den Stoßdämpfer 9, 10 und den von oben gesehen etwa U-förmigen Stabilisator 12, der über unten an den freien Enden seiner U-Schenkel 12/1, 12/2 und oben an den Längsträgern 1, 2 über Halteelemente 16, 17 befestigte Haltestäbe 18, 19 am Rahmen abgestützt ist, und
d) einer der beiden Multifunktions-Längslenker 5, 6 bildet außerdem das achsseitige Anlenkorgan für den Panhardstab 11.

Jeder der beiden Multifunktions-Längslenker 5, 6 weist drei funktionale Abschnitte 5/1, 5/2, 5/3 bzw. 6/1, 6/2, 6/3 auf, nämlich
a) einen ersten Abschnitt 5/1 bzw. 6/1 mit einer unteren Anlagefläche, mit der der Multifunktions-Längslenker 5, 6 auf je einer zugehörigen Anlagefläche am Starrachskörper 4 aufliegend befestigbar ist,
b) einen im Anschluss an den ersten Abschnitt 5/1, 6/1 über einen Übergangsbereich nach unten abgekröpften, plattenartig erweitert ausgebildeten und sich räumlich vor dem Starrachskörper 4 erstreckenden Abstützbereich 5/2 bzw. 6/2, an bzw. auf dem eine Luftfeder 7, 8 untenendig abgestützt und befestigt ist, und
c) einen sich am Abstützbereich 5/2, 6/2 anschließenden, zum längsträgerfesten Lagerbock 14, 15 hochgezogenen Führungsarm 5/3 bzw. 6/3.

Dabei ist jeder der beiden Multifunktions-Längslenker 5, 6 oben am Starrachskörper 4 aufliegend vorzugsweise mittels mehrerer Schraubverbindungen kraftschlüssig befestigt. Es kann zusätzlich zu diesem Kraftschluss auch noch ein Formschluss zwischen der Unterseite am ersten Abschnitt 5/1, 6/1 jedes Multifunktions-Längslenkers 5, 6 und der Oberseite bzw. dem oberen Bereich am Starrachskörper 4 vorgesehen sein, um einen absolut sicheren festen Verbund dieser drei Bauteile 4, 5, 6 zu gewährleisten.

Des weiteren ragen die beiden Multifunktions-Längslenker 5, 6 mit ihren ersten Abschnitten 5/1, 6/2 geringfügig über den Starrachskörper 4 hinaus und weisen an ihren dort gegebenen freien Enden jeweils eine integral angeformte oder angebaute Lagerstelle 5/4, 6/4 für die Befestigung des unteren Endes des Stoßdämpfers 9, 10 und daneben eine Anschlussstelle 5/5, 6/5 für die Befestigung eines Lagerbügels 20, 21 auf, der mit einem eingebauten Lager den Querschenkel 12/3 des U-förmigen Stabilisators 12 umfasst.

Der an einem Multifunktions-Längslenker 5, 6 sich vom ersten Abschnitt 5/1, 6/1 ausgehend nach unten zum plattenförmigen Abstützbereich 5/2, 6/2 hin erstreckende Übergangsbereich weist außenseitig eine Einbuchtung 5/6 bzw. 6/6 auf, in die die zugehörige Luftfeder 7 bzw. 8 raumsparend eingreift, ohne aber deren Wand zu berühren.

Jede Luftfeder 7, 8 weist einen Kolben 7%1, 8/1, oben eine Kopfplatte 7/2, 8/2 mit exzentrisch darauf befestigter, insbesondere angeschweißter Anschlusskonsole 7/3, 8/3 und einen sich zwischen Kopfplatte und Kolben erstreckenden Luftfederbalg 7/4, 8/4 auf. Jede Luftfeder 7, 8 ist mit ihrem Kolben 7/1, 8/1 an einem Zapfen 5/21, 6/21 am Abstützbereich 5/2, 6/2 des zugehörigen Multifunktions-Längslenkers 5, 6 abgestützt befestigt und oben mit ihrer Kopfplatte 7/2, 8/2 unten am zugehörigen Rahmen-Längsträger 1, 2 anliegend abgestützt sowie mittels der außen am betreffenden Rahmen-Längsträger 1, 2 angeflanschten Anschlusskonsole 7/3, 8/3 in dieser Anbaulage gehalten.

Jener Multifunktions-Längslenker 5 bzw. 6, der das achsseitige Anlenkorgan für den Panhardstab 11 bildet, weist einen nach oben und seitlich außen abragenden, integral angeformten oder angebauten Lagerbock 22 auf, zwischen dessen beiden Seitenwangen der Panhardstab 11 mit seinem achsseitigen Lagerauge 11/1 aufgenommen und gelagert ist.

Der U-förmige Querträger 13 ist im dargestellten Beispiel im Hinblick auf seine Brücken-Lagerfunktion aus mehreren vorgefertigten und anschließend zusammengeschweißten Einzelteilen, bei denen es sich vorzugsweise um Stahlblech-Stanz-/Biege-/Pressteile handelt, zusammengesetzt, nämlich
a) einem linken und einem rechten abgewinkelten oberen Schenkelteil 13/1, 13/2, das mit seinem Vertikalabschnitt 13/3, 13/4 außen und mit seinem Querabschnitt 13/5, 13/6 unten am zugehörigen Rahmenlängsträger 1, 2 anliegend, insbesondere mittels Verschraubungen befestigt ist,
b) einem linken und rechten haubenartigen Lagerbock 13/7, 13/8, der mit seiner Vertikalbasis außen am Vertikalabschnitt 13/3, 13/4 des oberen Schenkelteils 13/1, 13/2 angeschweißt ist und an dessen oberer Querplatte ein Stoßdämpfer 9 bzw. 10 mit seinem oberen Ende befestigbar ist,
c) einem linken und rechten unteren Schenkelteil 13/9, 13/10, das U-förmig ausgebildet und mit seinem oberen Quersteg 13/11, 13/12 am Querabschnitt 13/5, 13/6 des oberen Schenkelteils 13/1, 13/2 angeschweißt oder angeschraubt ist und dessen jeweils parallele Seitenschenkel 13/13, 13/14 sich schräg nach innen unten zum Starrachskörper 4 hin erstrecken,
d) einer vorderen und hinteren, Winkel- oder U-Profil-Querschnitt aufweisenden Quertraverse 13/15, 13/16, die an ihren äußeren freien Enden jeweils an den unteren freien Enden der Seitenschenkel 13/13, 13/14 des unteren Schenkelteils 13/9, 13/10 angeschweißt sind, und
e) einem Lagerbock 13/17, der zwischen die beiden Seitenschenkel 13/13 oder 13/14 eines unteren Schenkelteils 13/9 bzw. 13/10 eingeschweißt ist und in dem das rahmenseitige Ende 11/2 des Panhardstabes 11 aufgenommen und gelagert ist.

Der Starrachskörper 4 weist die an sich bekannte Form einer Faustachse mit hochgekröpften Enden auf, in deren vertikalen oder leicht schräg stehenden Durchgangsbohrungen über Achsschenkelbolzen und zugehörige Lager die Achsträger der Räder schwenkbar anschließbar sind.

Der Starrachskörper 4 ist in sich weitestgehend biege- und torsionssteif ausgelegt. Vorzugsweise handelt es sich bei dem Starrachskörper 4 um einen solchen, der unverändert auch für andere Achsen verwendet werden kann. Außerdem sind die beiden Multifunktions-Längslenker 5, 6 im Bereich ihrer ersten Abschnitte 5/1, 6/1 und ihrer sich daran über besagte Übergangsbereiche anschließenden abgekröpften Abstützbereiche 5/2, 6/2 im wesentlichen biege- und torsionssteif ausgelegt. Die sich an letztere anschließenden Führungsarme 5/3, 6/3 dagegen sind nur in Vertikalrichtung gesehen vergleichsweise biegesteif, aber um ihre Längsachse begrenzt tordierbar ausgebildet und hinsichtlich ihrer Biegesteifigkeit sowie Torsionsfähigkeit auf den Gesamtstabilisierungseffekt in Verbindung mit dem Stabilisator 12 abgestimmt durch entsprechende Bemessung und Formgebung der hierfür maßgeblichen Querschnitte.

## Patentansprüche

1. Fahrgestell eines Nutzfahrzeugs, insbesondere Lastkraftwagen, mit einem Rahmen, dessen beide Längsträger (1, 2) über mehrere Querträger miteinander verbunden sind, und mit mehreren Achsen, wobei die Vorderachse (3) lenkbare Räder an einem Starrachskörper (4) aufweist und über je Achsseite eine Luftfeder (7, 8) sowie einen Stoßdämpfer (9, 10) gegenüber dem Rahmen abgestützt, außerdem über einen Panhardstab (11) quergeführt sowie über Längslenker (5, 6) am Rahmen angelenkt ist, wobei
- die Vorderachse (3) nach Art einer Verbundienkerachse ausgebildet ist, bei der zwei Längslenker (5, 6) weit voneinander beabstandet jeweils am Starrachskörper (4) angesetzt und fest mit diesem verbunden sind,
- sich über dem Starrachskörper (4) ein von vorne gesehen etwa U-förmiger Querträger (13) erstreckt, der mit beiden Längsträgern (1, 2) verbunden ist und das rahmenseitige Anlenkorgan für den Panhardstab (11) bildet,
- die beiden Längslenker (5, 6) an ihren freien Enden in längsträgerfesten Lagerböcken (14, 15) gelagert sind,
- einer der beiden Längslenker (5, 6) das achsseitige Anlenkorgan für den Panhardstab (11) bildet,
**gekennzeichnet durch** folgende Merkmale:
a) an der nach Art einer Verbundlenkerachse ausgebildeten Vorderachse (3) sind als Längslenker (5, 6) zwei Multifunktions-Längslenker vorgesehen, die jeweils oben am Starrachskörper (4) aufgesetzt und dort mit diesem verbunden sind,
b) der U-förmige Querträger (13) bildet zusätzlich zu seiner Funktion als Anlenkorgan für den Panhardstab (11) mit seinen beiden entsprechend ausgebildeten oberen Schenkelenden (13/7,13/8) das rahmenseitige Anschlussorgan für die beiden Stoßdämpfer (9, 10),
c) die an ihren freien Enden in längsträgerfesten Lagerböcken (14, 15) gelagerten Multifunktlons-Längslenker (5, 6) bilden jeweils das achsseitige Abstütz- und Anschlussorgan für die Luftfeder (7, 8), den von der Luftfeder (7, 8) beabstandeten Stoßdämpfer (9, 10) und einen von oben gesehen etwa U-förmigen Stabilisator (12), der über unten an den freien Enden seiner U-Schenkel (12/1, 12/2) und oben mittelbar (16, 17) an den Längsträgern (1, 2) angelenkte Haltestäbe (18, 19) am Rahmen (1, 2) abgestützt ist.

2. Fahrgestell nach Anspruch 1, **dadurch gekennzeichnet, dass** beide Multifunktions-Längslenker (5, 6) jeweils drei funktionale Abschnitte aufweisen, nämlich
a) einen ersten Abschnitt (5/1, 6/1) mit einer unteren Anlagefläche, mit der der Multifunktions-Längslenker (5, 6) auf je einer zugehörigen Auflagefläche am Starrachskörper (4) aufliegend befestigbar ist,
b) einen im Anschluss an den ersten Abschnitt (5/1, 6/1) über einen Übergangsbereich nach unten abgekröpften, plattenartig erweitert ausgebildeten und sich räumlich vor dem Starrachskörper (4) erstreckenden Abstützbereich (5/2, 6/2), an bzw. auf dem eine Luftfeder (7, 8) mit ihrem Kolben (7/1, 8/1) befestigt ist, und
c) einen sich am Abstützbereich (5/2, 6/2) anschließenden, zum längsträgerfesten Lagerbock (14, 15) hochgezogenen Führungsarm (5/3, 6/3).

3. Fahrgestell nach Anspruch 2, **dadurch gekennzeichnet, dass** jeder der beiden Multifunktions-Längslenker (5, 6) am Starrachskörper (4) oben aufliegend kraftschlüssig mittels Schraubenverbindungen befestigt ist, und dass gegebenenfalls zusätzlich zu diesem Kraftschluss auch noch ein Formschluss zwischen der Unterseite am ersten Abschnitt des Multifunktions-Längslenkers (5, 6) und der Oberseite bzw. dem oberen Bereich am Starrachskörper (4) vorgesehen ist.

4. Fahrgestell nach Anspruch 1, **dadurch gekennzeichnet, dass** die beiden Multifunktions-Längslenker (5, 6) im Bereich ihrer ersten Abschnitte (5/1, 6/1) und der sich daran über Übergangsbereiche anschließenden abgekröpften Abstützbereiche (5/2, 6/2) im wesentlichen biege- und torsionssteif sind, dass ferner die sich daran anschließenden Führungsarme (5/3, 6/3) in Vertikalrichtung gesehen vergleichsweise biegesteif, aber um ihre Längsachse begrenzt tordierbar ausgebildet und hinsichtlich ihrer Biegesteifigkeit sowie Torsionsfähigkeit auf den Gesamtstabilisierungseffekt in Verbindung mit dem Stabilisator (12) abgestimmt sind durch entsprechende Bemessung und Formgebung der hierfür maßgeblichen Querschnitte.

5. Fahrgestell nach Anspruch 2, **dadurch gekennzeichnet, dass** beide Multifunktions-Längslenker (5, 6) mit ihren ersten Abschnitten (5/1, 6/1) den Starrachskörper(4) geringfügig überragen und an ihren freien Enden jeweils eine Lagerstelle (5/4, 6/4) für die Befestigung des unteren Endes eines Stoßdämpfers (9, 10) und daneben eine Anschlussstelle (5/5, 6/5) für die Befestigung eines Lagerbügels (20, 21) aufweisen, der mit einem eingebauten Lager den Querschenkel (12/3) des U-förmigen Stabilisators (12) umfasst.

6. Fahrgestell nach Anspruch 2, **dadurch gekennzeichnet, dass** der vom ersten Abschnitt (5/1, 6/1) eines Multifunktions-Längslenkers (5, 6) ausgehend sich nach unten zum plattenförmigen Abschnittsbereich (5/2, 6/2) hin erstreckende Übergangsbereich außenseitig eine Einbuchtung (5/6, 6/6) aufweist, in die die Luftfeder (7, 8) raumsparend eingreift, ohne aber deren Wand zu berühren.

7. Fahrgestell nach Anspruch 2, **dadurch gekennzeichnet, dass** jede Luftfeder (7, 8) mit ihrem Kolben (7/1, 8/1) auf einem Zapfen (5/21, 6/21) am Abstützbereich (5/2, 6/2) des zugehörigen Multifunktions-Längslenkers (5, 6) abgestützt befestigt ist und außerdem oben eine Kopfplatte (7/2, 8/2) mit einer exzentrisch darauf befestigten Anschlusskonsole (7/3, 8/3) aufweist, wobei die Luftfeder (7, 8) oben mit ihrer Kopfplatte (7/2, 8/2) an der Unterseite des zugehörigen Rahmen-Längsträger (1, 2) anliegend abgestützt und mittels der außen am betreffenden Rahmen-Längsträger (1, 2) angeflanschten Anschlusskonsole (7/3, 8/3) in dieser Anbaulage gehalten ist.

8. Fahrgestell nach Anspruch 1, **dadurch gekennzeichnet, dass** jener Multifunktions-Längslenker (5, 6), der das achsseitige Anlenkorgan für den Panhardstab (11) bildet, einen nach oben und seitlich außen abragenden, integral angeformten oder angebauten Lagerbock (22) aufweist, zwischen dessen beiden Seitenwangen der Panhardstab (11) mit seinem achsseitigen Lagerauge (11/1) aufgenommen und gelagert ist.

9. Fahrgestell nach Anspruch 1, **dadurch gekennzeichnet, dass** der U-förmige Querträger (13) aus mehreren vorgefertigten und anschließend zusammengeschweißten Einzelteilen, insbesondere Stahlblech-Stanz-/Biege-/Pressteilen, zusammengesetzt ist, nämlich
a) einem linken und einem rechten oberen abgewinkelten Schenkelteil (13/1, 13/2), das mit seinem Vertikalabschnitt (13/3, 13/4) außen und mit seinem Querabschnitt (13/5, 13/6) unten am zugehörigen Rahmenlängsträger (1, 2) anliegend, insbesondere mittels Verschraubungen befestigt ist,
b) einem linken und rechten haubenartigen Lagerbock (13/7, 13/8), der mit seiner Vertikalbasis außen am Vertikalabschnitt (13/3, 13/4) des oberen Schenkelteils (13/1, 13/2) angeschweißt ist und an dessen oberer Querplatte ein Stoßdämpfer (9, 10) mit seinem oberen Ende befestigbar ist,
c) einem linken und rechten unteren Schenkelteil (13/9, 13/10), das U-förmig ausgebildet und mit seinem oberen Quersteg (13/11, 13/12) am Querabschnitt (13/5, 13/6) des oberen Schenkelteils (13/1, 13/2) angeschweißt oder angeschraubt ist und dessen beide parallele Seitenschenkel (13/13, 13/14) sich schräg nach innen unten in Richtung Starrachskörper (4) erstrecken,
d) einer vorderen und hinteren, Winkel- oder U-Profil-Querschnitt aufweisenden Quertraverse (13/15, 13/16), die an ihren äußeren freien Enden jeweils an den unteren freien Enden der Seitenschenkel (13/13, 13/14) des unteren Schenkelteils (13/9, 13/10) angeschweißt sind, und
e) einem Lagerbock (13/17), der zwischen die beiden Seitenschenkel (13/13 oder 13/14) eines unteren Schenkelteils (13/9 oder 13/10) eingeschweißt ist und in dem das rahmenseitige Ende (11/2) des Panhardstabes (11) aufgenommen und gelagert ist.

10. Fahrgestell nach Anspruch 1, **dadurch gekennzeichnet, dass** der Starrachskörper (4) die an sich bekannte Form einer Faustachse mit hochgekröpften Enden aufweist, in deren vertikalen oder leicht schräg stehenden Durchgangsbohrungen über Achsschenkelbolzen und zugehörige Lager die Achsträger der Räder schwenkbar anschließbar sind, wobei der Starrachskörper (4) in sich weitestgehend biege- und torsionssteif ausgelegt ist.

## Claims

1. Chassis of a commercial vehicle, in particular of a truck, with a frame, the two longitudinal members (1, 2) of which are connected to each other via several cross members, and which frame has several axles, the front axle (3) of which frame features steerable wheels on a rigid axle body (4) and which front axle (3) is supported via a pneumatic spring (7, 8) and a shock absorber (9, 10) against the frame on each side of the axle; furthermore the front axle (3) is guided in a transverse direction by a Panhard rod (11) and is also steered by trailing arms (5, 6) on the frame, whereby
- the front axle (3) is designed in the form of a twist-beam axle, on which two trailing arms (5, 6) are placed on the rigid axle body (4) at a considerable distance apart from each other and are fixed to the rigid axle body (4),
- an approximately U-shaped cross member (13), when seen from the front, extends over the rigid axle body (4), which cross member (13) is connected to both longitudinal members (1, 2) and forms the frame-side steering element for the Panhard rod (11),
- the free ends of the two trailing arms (5, 6) are mounted in bearing blocks (14, 15) fixed in the longitudinal members,
- one of the two trailing arms (5, 6) forms the axle-side steering element for the Panhard rod (11),
**characterised by** the following features:
a) two multifunctional trailing arms are provided as trailing arms (5, 6) on the front axle (3) designed in the form of a twist-beam axle, which multifunctional trailing arms are each fitted on top of the rigid axle body (4) and there connected to the latter,
b) the U-shaped cross member (13) forms the frame-side connecting element for the two shock absorbers (9, 10) with its two appropriately designed upper shank ends (13/7, 13/8), alongside its function as a steering element for the Panhard rod (11),
c) the multifunctional trailing arms (5, 6), the free ends of which are mounted in bearing blocks (14, 15) fixed to the longitudinal members, form in each case the axle-side support and connecting element for the pneumatic spring (7, 8), the shock absorber (9, 10) located at a distance from the pneumatic spring (7, 8) and one of the approximately U-shaped, when seen from above, stabilisers (12), which U-shaped stabiliser (12) is supported on the frame (1, 2) by support rods (18, 19) that are connected at the bottom to the free ends of its U-shanks (12/1, 12/2) and at the top indirectly (16, 17) to the longitudinal members (1, 2).

2. Chassis according to claim 1, **characterised in that** the two multifunction trailing arms (5, 6) each features three functional sections, namely
a) a first section (5/1, 6/1) with a lower contact surface, with which the multifunctional trailing arm (5, 6) can each be fixed resting on one of the assigned contact surfaces on the rigid axle body (4),
b) a downwards offset extended plate-like support section (5/2, 6/2), spatially extending in front of the rigid axle body (4) and connected to the first section (5/1, 6/1) via a transition section, at or on which a pneumatic spring (7,8) with its piston (7/1, 8/1) is fixed, and
c) a guide arm (5/3, 6/3) attached to the support section (5/2, 6/2) and drawn up to the bearing block (14, 15) fixed to the longitudinal member.

3. Chassis according to claim 2, **characterised in that** each of the two multifunctional trailing arms (5, 6) is screw-fixed resting in a force-fitting manner to the top of the rigid axle body (4) and that, if required, in addition to this positive engagement, a further form-fitting closure is provided between the underside of the first section of the multifunctional trailing arm (5, 6) and the upper side or the upper section respectively on the rigid axle body (4).

4. Chassis according to claim 2, **characterised in that** the two multifunctional trailing arms (5, 6) are essentially bending-resistant and torsion-resistant in the area of their first sections (5/1, 6/1) and the offset support sections (5/2, 6/2) connected to these via transition areas, that furthermore the guide arms (5/2, 6/3) connected to the support sections (5/2, 6/2) are comparably bending-resistant, seen in a vertical direction, but are designed to have limited torsion around their longitudinal axis and, together with the stabiliser (12), are coordinated in terms of their bending strength and torsionability to the overall stabilising effect by corresponding dimensioning and shaping of the cross-sections essential for this.

5. Chassis according to claim 2, **characterised in that** the first sections (5/1, 6/1) of the two multifunctional trailing arms (5, 6) slightly project beyond the rigid axle body (4) and the free ends of the multifunctional trailing arms (5, 6) each feature a bearing location (5/4, 6/4) for the fixing of the lower end of a shock absorber (9, 10) and, beside this, a connecting location (5/5, 6/5) for the fixing of a bearing bracket (20, 21), which bearing bracket (20, 21) has an integral bearing that surrounds the cross shank (12/3) of the U-shaped stabiliser (12).

6. Chassis according to claim 2, **characterised in that** the transition section emanating from the first section (5/1, 6/1) of a multifunction trailing arm (5, 6) and extended downwards to the plate-shaped section area (5/2, 6/2) has, on the outside, a recess (5/6, 6/6) into which the pneumatic spring (7, 8) engages compactly without, however, contacting its wall.

7. Chassis according to claim 2, **characterised in that** each pneumatic spring (7, 8) with its piston (7/1, 8/1) is fixed in a supported manner on a pivot (5/21, 6/21) on the support area (5/2, 6/2) of the associated multifunctional trailing arm (5, 6) and also features at the top a head plate (7/2, 8/2) with a connecting bracket (7/3, 8/3) eccentrically fixed onto it, whereby the pneumatic spring (7, 8) is supported in a resting manner at the top with its head plate (7/2, 8/2) on the underside of the associated frame longitudinal member (1, 2) and is held in this position by means of the connecting bracket (7/3, 8/3) flanged externally on the respective frame longitudinal member (1, 2).

8. Chassis according to claim 1, **characterised in that** the multifunctional trailing arm (5, 6) which forms the axle-side steering element for the Panhard rod (11) features an upwardly and outwardly projecting, integrally moulded or attached bearing block (22), between the two side faces of which bearing block (22) the Panhard rod (11) with its axle-side bearing eye (11/1) is accommodated and mounted.

9. Chassis according to claim 1, **characterised in that** the U-shaped cross member (13) consists of several prefabricated and subsequently welded-together individual parts, in particular sheet steel punched / folded / pressed components, namely
a) a left and a right upper angled shank part (13/1, 13/2), the outside of the vertical section (13/3, 13/4) and the lower part of the transverse section (13/5, 13/6) of which angled shank part (13/1, 13/2) are fixed adjacent to the associated frame longitudinal member (1, 2), especially by means of screw fixings,
b) a left and a right hood-like bearing block (13/7, 13/8), the vertical base of which bearing block (13/7, 13/8) is welded onto the outside of the vertical section (13/3, 13/4) of the upper shank part (13/1, 13/2) and at the upper cross plate of which bearing block (13/7, 13/8) the upper end of a shock absorber (9,10) can be fixed,
c) a left and a right lower shank part (13/9, 13/10), designed in a U-shaped manner, and the upper transverse web (13/11, 13/12) of which lower shank part (13/9, 13/10) is welded or screw-fixed onto the cross section (13/5, 13/6) of the upper shank part (13/1, 13/2) and the two parallel side shanks (13/13, 13/14) of which extend obliquely inwards and downwards towards the rigid axle body (4),
d) a front and rear cross member (13/15, 13/16), with an angled or U-profile cross-section, the outer free ends of which cross member (13/15, 13/16) are each welded onto the lower free ends of the side shanks (13/13, 13/14) of the lower shank part (13/9, 13/10), and
e) a bearing block (13/17), which is welded between the two side shanks (13/13 or 13/14) of a lower shank part (13/9 or 13/10) and in which bearing block (13/17) the frame-side end (11/2) of the Panhard rod (11) is accommodated and mounted.

10. Chassis according to claim 1, **characterised in that** the rigid axle body (4) has the known shape of a stub axle with high cranked ends, in which ends vertical or slightly obliquely positioned through drill holes permit the connection of the axle brackets of the wheels by means of kingpins and associated bearings, whereby the rigid axle body (4) is intrinsically designed to be as bending-resistant and torsion-resistant as possible.

## Revendications

1. Châssis d'un véhicule industriel, en particulier d'un camion, avec un cadre dont les deux longerons (1, 2) sont reliés entre eux par le biais de plusieurs traverses, et avec plusieurs essieux, auquel cas l'essieu avant (3) présente des roues directrices sur un corps d'essieu rigide (4) et est en appui par rapport au cadre par le biais d'un coussin pneumatique (7, 8) ainsi qu'un amortisseur (9, 10) disposés de chaque côté de l'essieu, est de plus guidé transversalement par l'intermédiaire d'une barre Panhard (11) et articulé par le biais de bras de guidage longitudinaux (5, 6) montés sur le cadre, auquel cas
- l'essieu avant (3) est formé selon le type d'un essieu à bras combiné sur lequel chacun des deux bras de guidage longitudinaux (5, 6) est fixé sur le corps d'essieu rigide (4) à une certaine distance l'un de l'autre et est relié à celui-ci de manière fixe,
- une traverse (13) réalisée par exemple en U, vu de devant, s'étend au-dessus du corps d'essieu rigide (4) et cette traverse est reliée aux deux longerons (1, 2) et forme l'organe d'articulation côté cadre de la barre Panhard (11),
- les deux bras de guidage longitudinaux (5, 6) sont montés au niveau leurs extrémités libres dans des supports de fixation (14, 15) fixes sur les longerons,
- l'un des deux bras de guidage longitudinaux (5, 6) forme l'organe d'articulation côté essieu de la barre Panhard (11),
**caractérisé par** les caractéristiques suivantes :
a) au niveau de l'essieu avant (3) formé selon le type d'un essieu à bras combiné, le système prévoit comme bras de guidage longitudinaux (5, 6) deux bras de guidage longitudinaux multifonctions qui sont chacun accrochés en haut sur le corps d'essieu rigide (4) et sont reliés à celui-ci à cet endroit,
b) la traverse en U (13) forme, en plus de sa fonction comme organe d'articulation de la barre Panhard (11), l'organe de liaison côté cadre pour les deux amortisseurs (9, 10) au moyen de ses deux extrémités de fusée supérieures (13/7, 13/8) formées en conséquence,
c) les bras de guidage longitudinaux multifonctions (5, 6) montés dans des supports de fixation (14, 15) fixés sur les longerons au niveau de leurs extrémités libres forment chacun l'organe d'appui et de liaison côté essieu du coussin pneumatique (7, 8), de l'amortisseur (9, 10) placé à une certaine distance du coussin pneumatique (7, 8) et d'un stabilisateur (12) par exemple en U, vu de dessus, qui est appui sur le cadre par le biais de barres de retenue (18, 19) articulées en bas sur les extrémités libres de ses fusées en U (12/1, 12/2) et en haut indirectement (16, 17) sur les longerons (1, 2).

2. Châssis selon la revendication 1, **caractérisé en ce que** les deux bras de guidage longitudinaux multifonctions (5, 6) présentent chacun trois parties fonctionnelles, à savoir
a) une première partie (5/1, 6/1) avec un plan d'appui inférieur au moyen duquel le bras de guidage longitudinal multifonctions (5, 6) peut être fixé de manière posée sur un plan d'appui chacun au niveau du corps d'essieu rigide (4),
b) une zone d'appui (5/2, 6/2) coudée vers le bas raccordée à la première partie (5/1, 6/1) par le biais d'une zone de transition, formée par extension sous forme de plaques et s'étendant dans l'espace devant le corps d'essieu rigide (4), cette zone à ou sur laquelle un coussin pneumatique (7, 8) est fixé avec son piston (7/1, 8/1), et
c) un bras de guidage (5/3, 6/3) se raccordant à la zone d'appui, relevé par rapport au support de fixation (14, 15) fixé au longeron.

3. Châssis selon la revendication 2, **caractérisé en ce que** chacun des deux bras de guidage longitudinaux multifonctions (5, 6) est fixé sur le corps d'essieu rigide (4) en haut de manière posée par adhérence au moyen de liaisons boulonnées et **en ce que**, le cas échéant, en plus de cette adhérence, une liaison mécanique entre la face inférieure sur la première partie du bras de guidage longitudinal multifonctions (5, 6) et la face supérieure ou la zone supérieure est prévue en plus sur le corps d'essieu rigide (4).

4. Châssis selon la revendication 1, **caractérisé en ce que** les deux bras de guidage longitudinaux multifonctions (5, 6) sont pour l'essentiel résistants à la flexion et à la torsion au niveau de leurs premières parties (5/1, 6/1) et des zones d'appui (5/2, 6/2) coudées se raccordant à eux par des zones de transition et **en ce que**, de plus, les bras de guidage (5/3, 6/3) se raccordant à eux sont formés, vu dans le sens vertical, par comparaison de manière résistante à la flexion, mais pouvant être tordus de manière limitée autour de l'axe longitudinal et sont adaptés à l'effet de stabilisation global en liaison avec le stabilisateur (12) en ce qui concerne leur résistance à la flexion ainsi que leur capacité de torsion grâce à la mesure et à la forme appropriées de leurs sections transversales décisives pour cela.

5. Châssis selon la revendication 2, **caractérisé en ce que** les deux bras de guidage longitudinaux multifonctions (5, 6) dépassent légèrement du corps d'essieu rigide (4) avec leurs premières parties (5/1, 6/1) et présentent chacun à leurs extrémités libres un endroit de fixation (5/4, 6/4) pour la fixation de l'extrémité inférieure d'un amortisseur (9, 10) et à côté un endroit de liaison (5/5, 6/5) pour la fixation d'un étrier de fixation (20, 21) qui enveloppe la fusée transversale (12/3) du stabilisateur en U (12) avec un palier incorporé.

6. Châssis selon la revendication 2, **caractérisé en ce que** la zone de transition s'étendant de la première partie (5/1, 6/1) d'un bras de guidage longitudinal multifonctions (5, 6) vers le bas à la zone de croisement en forme de plaque (5/2, 6/2) présente côté extérieur une rainure (5/6, 6/6) dans laquelle le coussin pneumatique (7, 8) s'engrène de manière peu encombrante, sans pour autant toucher la paroi de la rainure.

7. Châssis selon la revendication 2, **caractérisé en ce que** chaque coussin pneumatique (7, 8) est fixé en appui sur un axe (5/21, 6/21) dans la zone d'appui (5/2, 6/2) du bras de guidage longitudinal multifonctions (5, 6) y afférent au moyen de son piston (7/1, 8/1) et, en plus, présente en haut une plaque supérieure (7/2, 8/2) avec une console de liaison (7/3, 8/3) fixée dessus de manière excentrée, auquel cas le coussin pneumatique (7, 8) est en appui de manière adjacente sur la face inférieure du longeron de cadre (1, 2) y afférent et est retenu dans cette position de montage au moyen de la console de liaison (7/3, 8/3) bridées à l'extérieur au longeron de cadre (1, 2) concerné.

8. Châssis selon la revendication 1, **caractérisé en ce que** ce bras de guidage longitudinal multifonctions (5, 6), qui forme l'organe d'articulation côté essieu de la barre Panhard (11) et présente un support de fixation (22) dépassant vers le haut et latéralement vers l'extérieur, moulé intégralement ou monté comme pièce rapportée, est retenu et fixé entre les deux joues latérales du support de fixation (22) de la barre Panhard (11) avec son oeillet de fixation (11/1) côté essieu.

9. Châssis selon la revendication 1, **caractérisé en ce que** la traverse en U (13) se compose de plusieurs pièces individuelles préfabriquées et ensuite soudées ensemble, en particulier de pièces estampées/pliées/embouties en tôle d'acier, à savoir
a) une pièce de fusée (13/1, 13/2) enroulée supérieure gauche et droite, qui est fixée à l'extérieur avec sa partie verticale (13/3, 13/4) et en bas avec sa section transversale (13/5, 13/6) de manière adjacente sur le longeron de cadre (1, 2) y afférent, en particulier au moyen de liaisons boulonnées,
b) un support de fixation (13/7, 13/8) gauche et droit en forme de capot, qui est soudé à l'extérieur, avec sa base verticale, sur la partie verticale (13/3, 13/4) de la pièce de fusée supérieure (13/1, 13/2) et sur la plaque transversale supérieure de laquelle un amortisseur (9, 10) peut être fixé avec son extrémité supérieure,
c) une pièce de fusée inférieure gauche et droite (13/9, 13/10), formée en U et soudée ou vissée avec son entretoise transversale supérieure (13/11, 13/12) au niveau de la partie transversale (13/5, 13/6) de la pièce de fusée supérieure (13/1, 13/2) et les deux fusées latérales parallèles (13/13, 13/14) de la pièce de fusée supérieure s'étendent de biais vers l'intérieur en bas en direction du corps d'essieu rigide (4),
d) une traverse (13/15, 13/16) avant et arrière, présentant une section transversale en équerre ou en profilé en U, qui sont chacune soudés à leurs extrémités extérieures libres aux extrémités inférieures libres des fusées latérales (13/13, 13/14) de la pièce de fusée inférieure (13/9, 13/10), et
e) un support de fixation (13/17) qui est soudé entre les deux fusées latérales (13/13 ou 13/14) d'une pièce de fusée inférieure (13/9 ou 13/10) et dans lequel l'extrémité côté cadre (11/2) de la barre Panhard (11) est retenue et montée.

10. Châssis selon la revendication 1, **caractérisé en ce que** le corps d'essieu rigide (4) présente la forme bien connue d'un essieu à chapes fermées avec extrémités coudées vers le haut, dans les perçages de passage verticaux ou légèrement de biais desquelles les supports d'essieu des roues peuvent être reliées de manière pivotable par le biais d'axes de fusée d'essieu et de roulements y afférents, auquel cas le corps d'essieu rigide (4) est conçu en lui-même le plus résistant possible à la flexion et à la torsion.
